# EUROPEAN PATENT APPLICATION

(11) **EP 1 947 857 A1**
(43) Date of publication of application: **23.07.2008**
(21) Application number: 08100291.7
(22) Date of filing: 09.01.2008
(51) Int. Cl.: H04N 7/173, H04L 12/28, H04L 29/08

(54) **Method of transmitting/receiving digital contens and digital content reception system**

(30) Priority: 16.01.2007 KR 20070004834
(71) Applicant: LG Electronics Inc., Yeongdeungpo-gu Seoul 150-721 (KR)
(72) Inventor: Hong, Ho Taek LG Electronics Inc. IP Group 16, 137-724, SEOUL (KR); Lee, Joon Hui LG ELECTRONICS INC. IP GROUP 16, 137-724, SEOUL (KR); Song, Jae Hyung LG ELECTRONICS INC.IP GROUP, 16, 137-724, SEOUL (KR); KIM, Jin Pil LG Electronics Inc.IP Group 16, 137-724, SEOUL (KR)
(74) Representative: Cabinet Plasseraud

(57) **Abstract**

A method of transmitting/receiving digital contents and a digital content reception system are disclosed. In a case of receiving a service including digital contents through the Internet, first channel information for identifying an entry point and second channel information for identifying a service provided by a service server or a service provider for providing the service can be selectively received. The digital content reception system can receive and store the first channel information from the entry point and can receive and store the second channel information from the service provider or the service server. Accordingly, since another service can be provided by changing a channel, it is possible to provide convenience to a user.

## Description

This application claims the benefit of Korean Patent Application No. 10-2007-0004834, filed on January 16, 2007, which is hereby incorporated by reference as if fully set forth herein.

### BACKGROUND OF THE INVENTION

### Field of the Invention

The present invention relates to a method of transmitting/receiving digital contents and a digital content reception system.

### Discussion of the Related Art

In the existing television (TV) system, contents created by a broadcasting station are transmitted via a wave propagation medium such as terrestrial, cable or satellite broadcasting and users view a broadcasting signal transmitted via the wave propagation medium using a receiver.

However, in the existing analog broadcasting, as a digital-based TV technology has been developed and commercialized, a service including a variety of contents such as real-time broadcasting, contents on Demand (CoD), games or news has been provided to users using an Internet network connected to individual homes, in addition to the existing wave propagation medium.

An example of provision of the service using the Internet network includes an Internet protocol TV (IPTV) system. The IPTV system indicates provision of an information service, moving-image contents and broadcasting to a television receiver using a super-high Internet network.

The IPTV system is equal to the general cable broadcasting or satellite broadcasting system in that a service including contents including a video is provided, but is characterized in that a bi-directional property is added. The IPTV system allows a user to view a desired service at a desired time, unlike the general terrestrial broadcasting, cable broadcasting or satellite broadcasting.

The user can access a server of a service provider for providing a service in the IPTV system and view a desired service at a desired time. However, conventionally, when the user receives the services, the user can use only the services provided by a system operator connected via the Internet used by the user. In addition, when accessing to the system operator and the server of the service provider, an operation step for selecting one of the system operator and the server of the service provider may vary according to receivers and thus may provide inconvenience to the user.

### SUMMARY OF THE INVENTION

Accordingly, the present invention is directed to a method of transmitting/receiving digital contents and a digital content reception system that substantially obviate one or more problems due to limitations and disadvantages of the related art.

An object of the present invention is to provide a method of transmitting/receiving digital contents and a digital content reception system, which are capable of allowing a user to use a variety of services without limitations on a system operator or a service provided by a system operator through a specific Internet network.

Another object of the present invention is to provide a method of transmitting/receiving digital contents and a digital content reception system, which are capable of accessing to a service by via any receiver when accessing to a server of a service provider and a system operator connected to the Internet.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a method of receiving digital contents using an Internet protocol (IP). In the method of receiving the digital contents, first channel information for identifying an entry point is selected and the entry point is accessed. Second channel information for identifying a service provided by a service provider is selected and the service including the digital contents is received from a service server of the service provider. Accordingly, a user can select a service by using the first channel information and the second channel information.

In the method of receiving the digital contents, service provider discovery information may be received from the entry point.

In the method of receiving the digital contents, at least one of the first channel information and access information of the service provider may be received from the entry point.

The method of receiving the digital contents may further include receiving service discovery information from the service provider. In the method of receiving the digital contents, at least one of the second channel information and access information on the server of the service provider may be received from the service provider. If the service is a package service, the second channel information may identify at least one service within the package service.

In a method of receiving digital contents according to another aspect of the present invention, first channel information for identifying entry point information and second channel information for identifying a user defined service including the digital contents are selected, and a server for providing the user defined service is accessed. In addition, the user defined service is received from the accessed server.

In a method of transmitting digital contents according to another aspect of the present invention, first channel information for identifying an entry point is selected and the access of a digital content receiver is allowed. It is checked whether a user of the receiver subscribes to a service of the system. In addition, if the user of the receiver subscribes to the service, service provider discovery information is transmitted to the receiver.

A digital content reception system according to another aspect of the present invention includes an interface which transmits/receives Internet protocol (IP) packets, an IP manager which processes the IP packets according to the IP so as to transmit/receive the IP packets, a controller which receives a signal for selecting at least one of first channel information for identifying an entry point and second channel information for identifying the service, outputs a signal for accessing the server according to the received selection signal, and acquires the digital contents included in the IP packets received by the interface, a memory which stores the first channel information and the second channel information, and an output unit which outputs the digital contents received by the controller.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a schematic view showing an IPTV service system using an entry number;

FIG. 2 is a view showing a service provider discovery record including an entry number;

FIG. 3 is a view showing the service provider discovery record including the entry number by an extensible Markup Language (XML) schema;

FIG. 4 is a view showing a package discovery record including a channel number;

FIG. 5 is a view showing the package discovery record including the channel number by the XML schema;

FIG. 6 is a view showing a user defined service management record;

FIG. 7 is a view showing the user defined service management record by the XML schema;

FIG. 8 is a block diagram showing the configuration of a receiver for providing a service using the entry number; and

FIG. 9 is a flowchart illustrating an example of receiving a service using an entry number.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Hereinafter, a method of transmitting/receiving digital contents and a digital content receiving system will be described with reference to the accompanying drawings. Hereinafter, for example, an Internet protocol television (IPTV) system will be described in order to readily describe the present invention. The IPTV system is an example of a digital content provision system capable of providing the digital contents to the a receiver. The digital content provision system may have a system operator, a service provider and a server of the service provider.

The IPTV system which is one of systems for providing services or contents using the Internet may include service providers for creating and providing the contents, an IPTV operator or portal, and a receiver for receiving the contents or the services. The receiver may be called as a client in view of reception of the service. The service provider creates and organizes a variety of contents and provides the contents to the IPTV system operator.

The IPTV system operator collectively organizes and provides a variety of services to the receiver. The receiver accesses the IPTV system operator and receives information on the service providers for providing the contents to the system operator. The receiver can access a service provider on the basis of the information on the service providers and receive a service.

The IPTV receiver indicates a receiver for receiving data transmitted via an Internet network and providing the data to a user. The receiver includes an IPTV settop, a homenet gateway, and an IPTV embedded TV. In order to allow the receiver to receive a desired service, the user of the receiver searches for and accesses a service server for storing the desired service.

The receiver accesses an entry point of the system operator providing a service to the receiver or an entry point which can be set by the user, in order to search for the service server.

Here, the entry point is information for allowing the receiver to enter a service, and indicates access information or an server for initial access in order to connect the service. Hereinafter, the entry point is also called a service discovery entry point. In the IPTV system, since the receiver accesses the system operator in order to initially receive the service, information associated with the system operator may become the entry point. The user may directly input and register the entry point in the receiver or the receiver may receive information from the system operator and register the entry point.

The receiver accesses a system operator, which is set in the receiver using information such as an IP address/port, a domain name system (DNS) and a uniform resource locator (URL) indicating the entry point or is input by the user, in order to acquire the service discovery entry point information.

The receiver receives a service provider discovery record, which is information including access information of the service provider, from the accessed entry point.

The receiver analyzes the service provider discovery record, acquires the access information of the service provider included in the service provider discovery record, and accesses the server of the service provider which can provide a service desired by the user. The service provider provides a service discovery record, which is information including the access information of the server for storing the service, to the receiver. The receiver analyzes the received service discovery record, accesses a server using the service discovery record, and receives the service. Hereinafter, the service may include digital contents.

In order to transmit/receive the service provider discovery record and the service discovery record, a protocol for transmitting the service, for example, a service discovery & selection (SD&S) protocol or a service discovery protocol (SDP), may be used.

These protocols can provide list information and access information of the service provider described by an extensible Markup Language (XML) and the access information of the server for storing the service to the receiver.

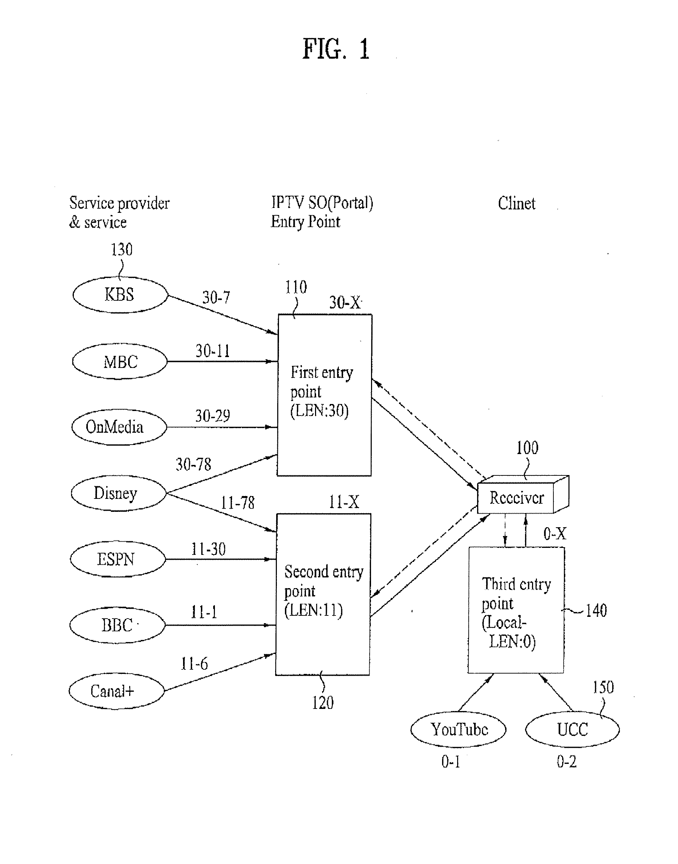

FIG. 1 is a schematic view showing an IPTV system using an entry number, according to an embodiment.

The IPTV system includes a receiver 100, a first entry point 110, a second entry point 120, first service providers 130, a third entry point 140 and a second service provider 150. The system operator may become the entry point and the receiver may use the entry number in order to identify the entry point. The receiver may use a channel number in order to identify a service received via the entry point. The entry number and the channel number may be called a logical number.

The entry number may be received from the entry point or may be registered in the receiver by the user. The channel number may be received from the service provider for providing the service (or a service server of the service provider) or may be registered in the receiver by the user.

For example, a small web TV may provide only moving image service, the entry point of which is previously set in the receiver. The service provided by a private server such as the web TV is called a user defined service. The user defined service may be a service which is provided non-periodically according to an irregular schedule. This service is generally not stored in the receiver unless the user accesses the service or store separate access information.

If the entry point information is not registered in the receiver, the user can register an address including a numeral or a text for identifying the system operator and the service provider in the receiver, and receive the service.

The receiver 100 shown in FIG. 1 accesses the entry point registered in the receiver 100 or the entry point selected by the user, in order to acquire service provider discovery information.

Hereinafter, it is assumed that the receiver 100 tries to access the first entry point 110 and the second entry point 120. The IPTV system operators 110 and 120 of the first entry point 110 and the second entry point 120 check subscription information of the receiver 100 which tries to access the entry point.

The IPTV system operators check the subscription information of the receiver 100 and checks whether the receiver 100 can receive services associated with the IPTV system operators. The IPTV system operators can check the subscription information using a conditional access system (CAS).

If the checking of the subscription information is finished, the IPTV system operators of the first entry point 110 and the second entry point 120 transmit information on the service providers and the individual entry numbers to the receiver 100. In the example shown in FIG. 1, the entry number of the first entry point 110 is '30' and the entry number of the second entry point 120 is '11'.

The IPTV system operators include the entry numbers and the information on the service providers in the service provider discovery record and transmit the service provider discovery record to the receiver 100. The information on the service providers includes the list information and the access information of the service providers.

In the example shown in FIG. 1, the service providers for providing the services associated with the first entry point 110 include 'KBS' (a first terrestrial broadcasting station or broadcasting service of KBS), 'MBC' (a second terrestrial broadcasting station or broadcasting service of MBC), 'OnMedia' (a first cable broadcasting station or broadcasting service of OnMedia), and 'Disney' (a first satellite broadcasting station (or broadcasting service of Disney). The service providers for providing the services associated with the second entry point 120 so as to provide the services include 'Disney' (a first satellite broadcasting station or broadcasting service of Disney), 'ESPN' (a second cable broadcasting station or broadcasting service of ESPN), 'BBC' (a second cable broadcasting station or broadcasting service of BBC), and 'Canal+' (a third cable broadcasting station or broadcasting service of Canal+)).

The service provider discovery record transmitted from the IPTV system operator of the first entry point 110 includes the entry number '30' of the first entry point 110 and information on the 'KBS', 'MBC', 'OnMedia' and 'Disney'. The service provider discovery record transmitted from the IPTV system operator of the second entry point 120 includes the entry number '11' of the second entry point 120 and information on the 'Disney', 'ESPN', 'BBC' and 'Canal+'.

The receiver 100 can store information on the service providers and the entry number received from the IPTV system operators.

The receiver 100 can access the servers of the first service providers 130 associated with the IPTV system operators using the access information of the service provider in the information on the service providers. If the first service providers 130 transmit the service discovery record to the receiver 100, the receiver 100 can store information included in the service discovery information.

The service discovery record can include the access information of a service server for providing a service and the channel number for identifying the service provided by the first service provider 130.

If a service provider for providing a service package including a plurality of services is included in the first service providers 130, the services included in the service package provided by the service provider may have respective channel numbers.

The service provider for providing the service package can include the channel numbers of the services included in the service package and the access information of the servers for providing the services according to the channel numbers in the service discovery record information, and transmit the service discovery record information to the receiver 100.

For example, if two services are included in the package provided by the service provider, the service discovery record information includes the channel numbers of the two services and the access information of the service servers.

The receiver 100 can access the server for providing a service desired by the user using the access information of the service server included in the service discovery record information and provide the service stored in the accessed service server to the user.

Fig. 1 shows a case where the service providers provide the services on the basis of the service unit, rather than on the basis of the service package unit. In the channel numbers of the services associated with the IPTV system operator of the first entry point 110, 'KBS' has a channel number of '7', 'MBC' has a channel number of '11', 'OnMedia' has a channel number of '29', and 'Disney' has a channel number of '78'.

In the channel numbers of the services associated with the IPTV system operator of the second entry point 120, 'Disney' has a channel number of '78', 'ESPN' has a channel number of '30', 'BBC' has a channel number of '1', and 'Canal+1' has a channel number of '6'.

******************************************

By the above-described process, the receiver 100 can receive the entry numbers of the entry points of the IPTV system operators and the channel numbers of the services provided by the service providers associated with the IPTV system operators. The receiver can access a service desired by the user using the entry numbers, the channel numbers and the access information of the servers for providing the services. The IPTV system can provide the entry numbers for identifying the system operators and the channel numbers for identifying the service to the receiver. That is, logical numbers include two parts: a first part corresponding to the entry number and a second part corresponding to the channel number. The receiver can use the logical number having the two parts.

For example, when the user inputs a 2-part number to the receiver, the receiver can recognize the number of the first part as the entry number and the number of the second part as the channel number. That is, when the user inputs the 2-part number of '30-7', the receiver can recognize the number of the first part '30' as the entry number and the number of the second part '7' as the channel number.

Accordingly, when the user inputs '30-7' while viewing the 'BBC' channel associated with the IPTV system operator of the second entry point 120, the receiver 100 accesses the 'KBS' channel having a channel number '7', which is associated with the IPTV system operator of the first entry point 110 having an entry number '30', and provides a service.

If the user inputs a 1-part number to the receiver, the receiver can recognize the input number as the channel number within the entry number which is currently being accessed. When the receiver has in contact with a system operator using the entry number of the system operator, if the user inputs the 1-part number '30', the receiver can recognize '30' as the channel number.

Accordingly, when the user inputs '30' while viewing the 'BBC' channel associated with the IPTV system operator of the second entry point 120, the receiver 100 receives the service of the 'ESPN' having a channel number '30', among the services provided by the service providers associated with the IPTV system operator of the second entry point 120.

In a case of accessing the IPTV system operator and receiving the service from the service provider associated therewith, the entry number and the channel number corresponding thereto can be received and used.

However, with respect to the user defined service, the receiver 100 may not receive the information on the service. In this case, the user may know only the IP address/port, the DNS, or the URL of the corresponding service, but the service discovery record information, the entry number information and the channel number information are not provided from the service server to the receiver.

Even with respect to the user defined service, the receiver receives and stores the entry number and the channel number from the user and provides the service when the user inputs the stored entry number and channel number to select the service, such that the above-described embodiment can be implemented.

The receiver 100 stores the third entry point 140 associated with the user defined service and the entry number of the third entry point 140. The receiver may set and store the channel number with respect to the user defined service of the second service provider 150.

The information on the third entry point 140 which can acquire the access information for accessing the user defined service may be stored in the receiver 100. In the example shown in FIG. 1, the entry number of the third entry point 140 is '0'. The receiver can store the entry point information defined by the user so as not to overlap the other entry point information. The third entry point 140 for providing the user defined service of FIG. 1 may be an actual system operator or a virtual system operator which is stored only in the receiver. In either case, the receiver can store the entry point which can receive the user defined service.

In the example shown in FIG. 1, the user defined service associated with the third entry point 140 includes 'YouTube' (first user defined service) and 'UCC' (second user defined service). With respect to these services, the user can input and register service information to the receiver 100. In the example shown in FIG. 1, the channel number of 'YouTube" is '1' and the channel number of 'UCC' is '2'. The channel numbers corresponding to the services may be numbered in order of inputting and registering the service addresses or may be stored when the user inputs and registers the addresses of the services. That is, the receiver 100 stores the entry number of the third entry point 140 associated with the user defined services and the access information of the user defined services.

The logical number of the user defined service may be used in a manner similar to the first entry point and the second entry point. For example, when the user inputs a 2-part number, the receiver recognizes the number of the first part as the entry number and recognizes the number of the second part as the channel number. If the user inputs a 1-part number, the receiver recognizes the input number as the channel number within the entry number which is currently being accessed.

When the user inputs a 2-part number of '0-1' while viewing the service of the 'KBS' associated with the first entry point 110, the receiver 100 recognizes the number of the first part '0' as the entry number and the number of the second part '1' as the channel number and accesses the server of 'YouTube' which is one of the user defined services.

When the user inputs a 1-part number of '2' while viewing the service of the 'YouTube' associated with the third entry point 140, the receiver 100 accesses the server of 'UCC' having a channel number of '2', between the user defined services associated with the third entry point 140. By this method, the user can distinguish various IPTV system operators and service providers and readily access a service desired by the user.

In addition to the above-described embodiment, the receiver may receive only the entry number and access the IPTV system operator.

The number part other than the entry number and the channel number may be further included in the logical number system using the entry number and the channel number. Accordingly, a number having at least two parts, including the entry number and the channel number, may be used to access the service desired by the user.

For example, a number part for distinguishing the types of the services may be set or a number part for distinguishing the content providers for providing contents to the service provider may be set. In addition, a number part for distinguishing the region codes of the IPTV system operators may be added such that the IPTV system operators are distinguished in detail.

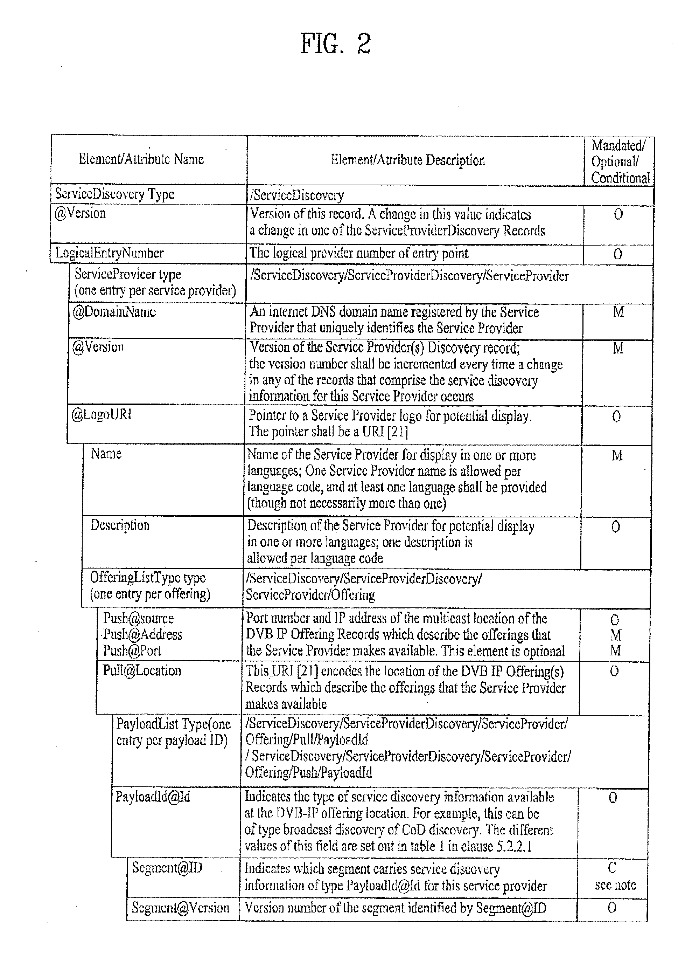

FIG. 2 is a view showing a service provider discovery record including an entry number according to an embodiment of the present invention by an extensible Markup Language (XML) schema.

When the receiver tries to access an entry point, the IPTV system operator of the entry point checks the subscription information of the accessing receiver and transmits the access information of the service provider and the entry number to the receiver.

In order to readily describe an example of the logical channel, a digital video broadcasting over IP (DVB-IP) system is considered. In this system, the access information of the service provider and the entry number may be included in the service provider discovery record, as shown in FIG. 2.

In the example shown in FIG. 2, a "ServiceDiscoveryType' element describing the information on the service provider discovery record is included in a tag identified by 'ServiceDiscovery'. '@Version' includes the version information of this record. If the version information is changed, it is indicated that the data of the record is changed.

A 'LogicalEntryNumber' element indicates the logical entry number of the entry point included in the service provider discovery record.

In the example shown in FIG. 2, a 'ServiceProvidertype' element indicating the information on the service provider is included in a tag identified by 'ServiceDiscovery/ServiceProvider-Discovery/ServiceProvider'. In the 'ServiceProvidertype' element, attributes '@DomainName', '@Version', and '@LogoURI' may be defined. '@DomainName' is location information of the service provider for distinguishing the service providers and may include, for example, Internet DNS domain name information. '@Version' includes the version information of the service provider discovery record. '@LogoURI' includes a pointer of the logo of the service provider.

A 'Name' element included in the 'ServiceProvidertype' element includes the name of the service provider. The name of the service provider may be provided in one or more language.

A 'Description' element includes the description of the service provider. The description of the service provider may be provided in one or more language.

In the example shown in FIG. 2, an 'Offering list' element of the service provider is included in a tag identified by
'ServiceDiscovery/ServiceProviderDiscovery/ServiceProvider/Of fering'. The offering list may include the list information of individual services (e.g., digital contents) which can be provided.

'Push@Source', 'Push@Address', and 'Push@Port' indicate information on a source, an address and a port for providing the individual services in a multicast mode (Push mode), respectively. If the system for providing the service is the DVB-IP system, the record for the individual services is called a DVB-IP offering record. A 'Pull@Location' element includes information on the location at which the record for the individual services (e.g., DVB-IP offering record) is provided by a request (if a Pull mode).

A 'PayloadList Type' element is the list information of payloads included in the record. In the example shown in FIG. 2, the 'PayloadList Type' element by the pull mode is included in a tag identified by 'ServiceDiscovery/ServiceProviderDiscovery/ServiceProvider/Of fering/Pull/Payload'. In the example shown in FIG. 2, the 'PayloadList Type' element by the push mode is included in a tag identified by 'ServiceDiscovery/ServiceProviderDiscovery/ServiceProvider/Of fering/Push/Paylaod.

A 'PayloadId@Id' element indicates the type of an available service discovery record. The service discovery record may include a broadcast discovery record or a CoD discovery record.

A 'Segment@Id' element includes the identification of a segment corresponding to the service discovery record of 'PlayloadId@Id'. A 'Segment@Version' element includes the version information of the segment identified by the identification of the segment.

In a right column of the example shown in FIG. 2, O indicates that the element or the attribute is optional, M indicates that the element or the attribute is mandatory, and C indicates that the element or the attribute is conditional. Accordingly, it is indicated that the '@DomainName', '@Version' and 'Name' information are mandatory. The 'Push@Address' and 'Push@Port' information is mandatory if 'Push@Source' is used. However, the 'Push@Source' information is optional. The 'Segment@Id' information is mandatory if the record information is provided only in the Pull mode, but is optional if the record information is provided in the Push mode.

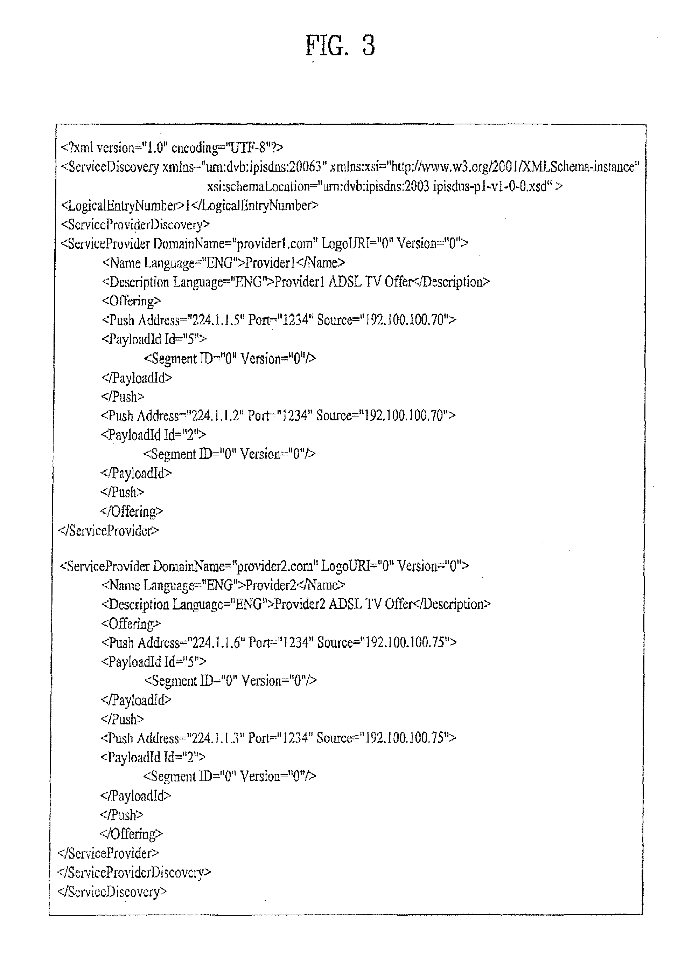

FIG. 3 is a view showing the service provider discovery record including the entry number by an XML schema according to the embodiment of the present invention. The service provider discovery record shown in FIG. 3 includes the access information of the service provider and the entry number according to the record structure of FIG. 2.

In the example shown in FIG. 3, 'LogicalEntryNumber' includes '1' which is the entry number of the entry point for transmitting the service provider discovery record. The access information of the first service provider is included in a first 'ServiceProvider' which is provided below 'ServiceProviderDiscovery' of the service provider discovery information. 'provider1.com', which is the domain name of the first service provider, the pointer 'LogoURI' of the logo, and the version may be included.

'Provider1' which is the name of the first service provider is included in 'Name', and 'Provider1 ADSL TV Offer' describing the first service provider may be included in 'Description'.

Information on an IP address (224.1.1.5)/port number(1234) at which an offering record (provided by, for example, the DVB-IP system) can be received in the multicast mode (Push mode) and a source address (192.100.100.70) which is the original address of the service are included in "Push'.

The identification of the payload of the service discovery record received from the IP address (224.1.1.5) is included in 'Payload Id' which is provided below the 'Push'. In the example shown in FIG. 3, the identification of the service discovery record has a value of '5'. For example, the service discovery information having the identification of '5' may become a package discovery record. In the example shown in FIG. 3, the identification of the segment included in the package discover record is '0' and the version thereof is '0'.

Information on an IP address (224.1.1.2)/port number(1234) at which an offering record of an individual service can be received in the multicast mode (Push mode) and a source address (192.100.100.70) which is the original address of the service are included in a second 'Push'.

The identification of the payload of the service discovery record received from the above-described address is included in 'Payload Id' which is provided below the 'Push'. In the example shown in FIG. 3, 'Payload Id' has a value of '2' and the service discovery record according to the identification of the payload may be the identification of the broadcast discovery record. In the example shown in FIG. 3, the service discovery information has a segment within the payload having the value of '2', the identification of the segment thereof is '0' and the version thereof is '0'.

In the example shown in FIG. 3, the access information of the second service provider which is provided below 'ServiceProviderDiscovery' is included in 'ServiceProvider'. 'provider2.com', which is the domain name of the second service provider, the indicator 'LogoURI' of the logo, and the version may be included.

'Provider2' which is the English name of the second service provider is included in 'Name' and 'Provider2 ADSL TV Offer' describing the second service provider may be included in 'Description'.

Information on an IP address (224.1.1.6)/port number(1234) at which an offering record included in the service discovery record can be received in the multicast mode (Push mode) and a source address (192.100.100.75) are included in "Push'. 'Payload Id' has a value of '5' and the service discovery record having the identification of the payload may be, for example, the package discovery record. FIG. 3 shows a case where the identification of the segment and the version information are set to '0'.

Information on an IP address(224.1.1.3)/port number(1234) at which an offering record (provided by, for example, the DVB-IP system) can be received in the multicast mode (Push mode) and a source address (192.100.100.75) are included in a second "Push'.

'Payload Id' has a value of '2' and information having the identification of the payload may be the broadcast discovery record. The example shown in FIG. 3 includes the identification (0) of the segment of the service discovery record for the payload and the version information (0).

As shown in FIG. 3, the receiver can receive the service provider discovery record and store the entry number and the access information of the service provider included in the service provider discovery record. The receiver can receive the individual service (that is, the offering record) provided by the service provider using the access information.

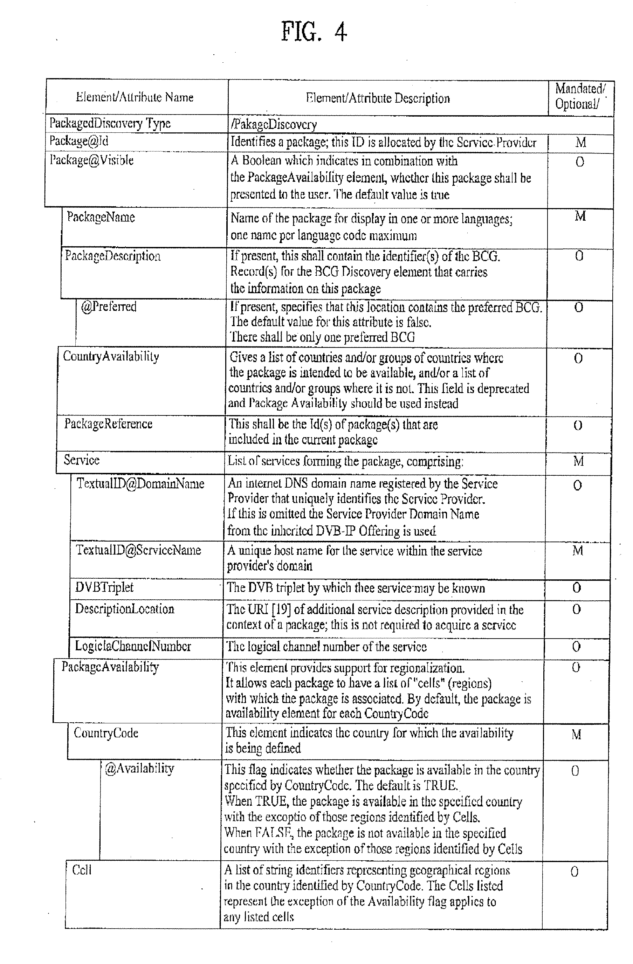

FIG. 4 is a view showing the structure of a package discovery record including a channel number. As described above, the services may be grouped to a package and the service discovery record for grouped services may be provided to the receiver.

The service provider transmits service discovery information, which can be received by the receiver, to the receiver. An offering record and information associated with the offering record may be, for example, included in the service discovery information. In this case, the service provider may include the channel number in the service discovery information and transmit the service discovery information to the receiver.

That is, the service provider may provide a package (package discovery record) obtained by grouping several individual services to the receiver. At this time, the service provider may include the channel numbers corresponding to the services in the service discovery information such as the broadcast discovery record or the CoD discovery record and transmit the service discovery information to the receiver.

In the example shown in FIG. 4, the package discovery record information may be included in a tag identified by 'PackageDiscovery'. In addition, location information '@DomainName' within the identification of the service provider of the (DVB-IP) offering record and the version information '@Version' of the record are included. 'Package@Id' indicates the identification of the package. The identification of the package may be given by the service provider.

'Package@Visible' indicates whether the package is presented to the user in combination with 'PackageAvailability'.

'PackageName' includes information on the name of the package. The name may be provided in one or more language.

'PackageDescription' includes the identification of a broadband content guide (BCG) record including the information on the package. '@preferred' indicates information indicating whether a preferred BCG is included.

'CountryAvailability' indicates list information or group information of a country (or countries) which will be intended to use the package.

'PackageReference' includes identifications of packages included in the current package.

'Service' includes a list of services included in the package.

'TextuaID@DomainName' indicates textual location information for identifying the service provider, for example, location information of the service provider registered in the Internet DNS domain name.

'TextualID@ServiceName' indicates the name of a host for providing the service within the domain of the service provider.

'DVBTriplet' indicates the identification of the service in a case of providing various services (for example, in a case of providing the services according to the DVB standard). For example, DVBTriplet may include information on a network ID, a transport stream ID and a service ID in the case of providing the services according to the DVB standard.

'DescriptionLocation' indicates the location information of information describing an additional service provided to the package.

'LogicalChannelNumber' indicates the logical channel number of the service which can provide the package.

'PackageAvaiability' includes information on a region associated with the package and includes list information of a cell (region) associated with the package. The package is set as a default such that the package can be used anywhere.

'CountryCode' includes information on the country associated with 'PackageAvailability'.

'@Availability' includes information indicating whether the package can be used in the country specified by 'Countrycode' and has a default value of 'True'.

'Cells' includes the identification of the geographical region of the country identified by 'Countrycode'.

The structure of the service discovery record of the individual service which is not provided by the package may be different from the example shown in FIG. 4, but, even in this case, may include the channel number for identifying the service.

In the record shown in FIG. 4, 'Package@Id', 'PackageName', 'Service' and 'TextualID@ServiceName' information may be mandatory and 'CountryCode' may be mandatory if 'PackageAvailability' is used. The remaining information described with reference to FIG. 4 may be optional.

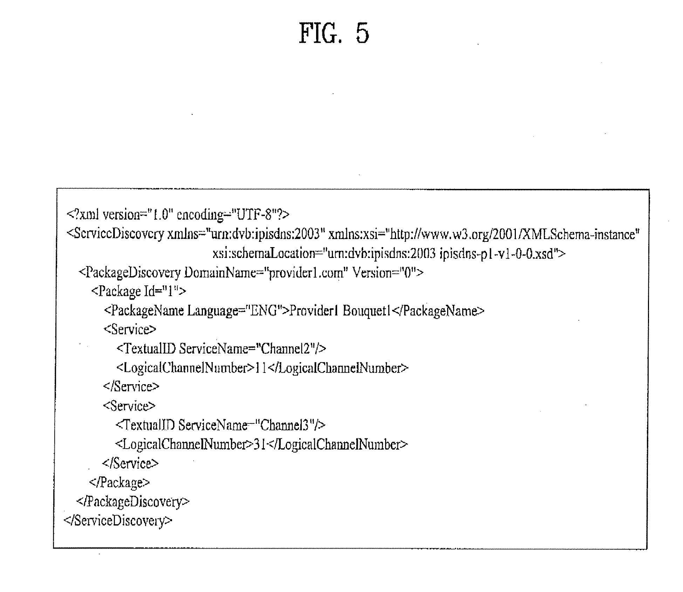

FIG. 5 is a view showing an example of the package discovery record shown in FIG. 4 by the XML schema. The package discovery record shown in FIG. 5 includes the information on the package discovery record and the channel number according to the example of FIG. 4.

The package discovery record shown in Fig. 5 includes the location information 'DomainName' (provider1.com), at which the service package is provided, and the version information 'Version' (0) of the service package.

The package identification (package Id) '1' and the package name 'Provider1 Bouquet1' are included. In the example shown in FIG. 5, the host name 'Channel2' of the service included in the domain of the service provider (Provider 1) and the logical channel number '11' may be included in the 'Service' element which is a first service included in the package identification 'Package Id'.

The host name 'Channel3' of the service included in the domain of the service provider (Provider 1) and the logical channel number '31' are included in the 'Service' element which is a second service provided below 'Package Id'.

The remaining information of the service may be transmitted to the receiver using the broadcast discovery record or the CoD discovery record according to the type of the provided service. The receiver may store the package information and the channel number received and included in the package discovery record.

The receiver may receive and store the entry numbers and the channel numbers from the system operators and the service providers by the above-described method. The user can select and view a desired service among the services provided by the service providers using the stored entry numbers and channel numbers. That is, the user can select the entry number and the channel number in the 2-part number form or select the logical number in the 1-part number, and access the desired service.

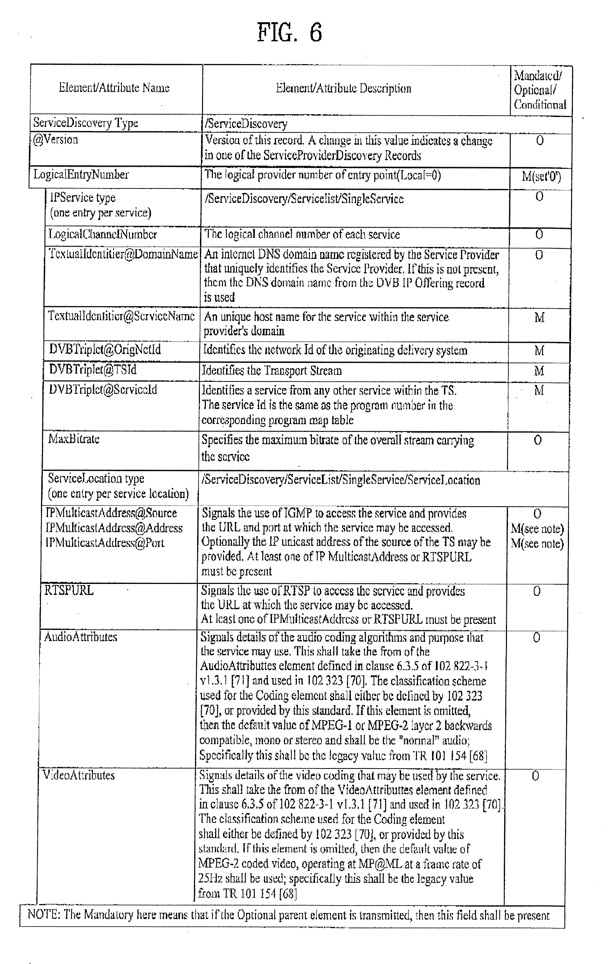

FIG. 6 is a view showing the structure of a user defined service management record including a logical number. The user defined service management record is generally called information for describing services provided by servers for providing user defined services. Accordingly, the service defined service management record corresponds to the example shown in FIG. 2 in view of the description of the entry point and corresponds to the example shown in FIG. 4 in view of the description of the service.

The record can be received using the entry information and the channel information from a service provider, though the service provides only a service such as a moving image through the Internet without the information on the entry point.

In FIG. 6, the information on the user defined service management record (ServiceDiscovery Type) is included in a tag identified by 'Servicediscovery'.

'@version' includes the version information of the user defined service management record.

'LogicalEntryNumber' includes the logical entry number as the entry point information. In the example shown in FIG. 6, the logical entry number for accessing the user defined service has a value of '0'.

'IPService type' is the user defined service and may be included at a location 'ServiceDiscovery/ServiceList/SingleService'.

'LogicalChannelNumber' includes the logical channel number of the service. Unlike the examples shown in FIGs. 2 and 4, the logical channel number can be registered in the receiver by the user, without being received from the system operator or the service provider.

'TextualID@DomainName' is the location information for identifying the service provider and includes the Internet DNS domain name in a text form.

'TextualID@ServiceName' includes the host name of the provided service within the domain of the service provider.

'DVBTriplet' includes the information for identifying the services. FIG. 6 shows the example of providing the user defined service according to the DVB-IP system. 'DVBTriplet@OrigNetId' indicates the network identification original_network_id of the transmitting system, 'DVBTriplet@TSId' indicates the transport stream identification Transport_stream_id, and 'DVBTriplet@ServiceId' indicates the service identification service_id.

'MaxBitrate' indicates the maximum bit rate of the overall stream carrying the service.

In FIG. 6, the service location information is included in the location information 'ServiceDiscovery/ServiceList/SingleService/ServiceLocation'.

'IPMulticastAddress@Source', 'IPmulticastAddress@Address' and 'IPmulticastAddress@Port' signals the use of an Internet group management protocol (IGMP) to access the service and includes the URL at which the service may be accessed and the information on the port. Optionally, the unicast address of the source of the transport stream (TS) may be included.

'RTSPURL' signals the use of a real-time streaming protocol (RTSP) to access the service and includes the information on the URL at which the service may be accessed.

'AudioAttributes' provides the information on the audio coding algorithm which may be used by the service. 'VideoAttributes' provides the detailed information of the video coding which may be used by the service.

In the record shown in FIG. 6, 'LogicalEntryNumber', 'TextualID@ServiceName', 'DVBTriplet@OrigNetId', 'DVBTriplet@TSId' and 'DVBTriplet@ServiceId' information may be set as the mandatory information. In addition, 'IPMulticastAddress@Source', 'IPMulticastAddress@Address' and 'IPMulticastAddress@port' information may be set as the mandatory information if 'IPMulticastAddress@Source' is used. The other information excluding the above-described information may be optionally used.

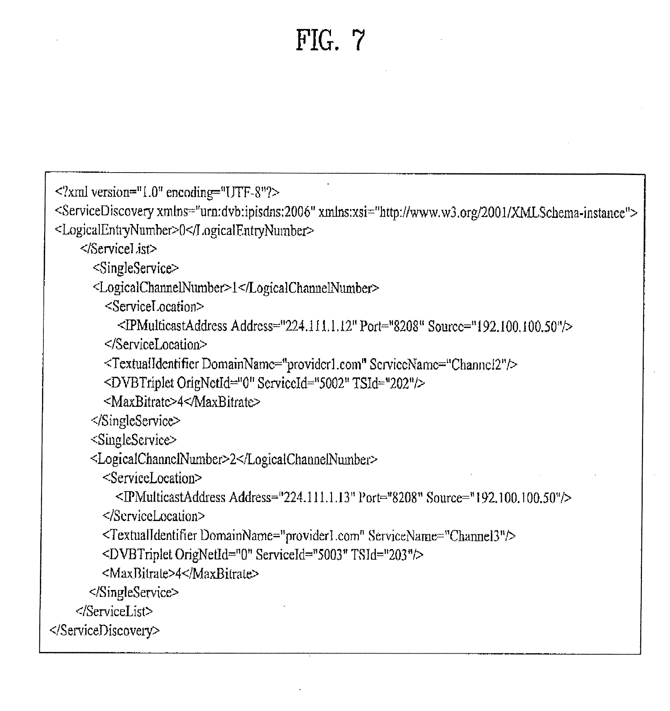

FIG. 7 is a view showing the user defined service management record shown in FIG. 6 by the XML schema. The user defined service management record shown in FIG. 7 may include the entry number, the channel number and the access number of the user defined service according to the record structure of FIG. 6.

In the example shown in FIG. 7, the user defined service management record includes the entry number '0' included in the service point information of the service defined service. The individual services included in 'ServiceList' element are included in 'SingleService' element.

The logical channel number '1' of the first service and the location information 'ServiceLocation' at which the service is located may be included below the first 'SingleService' element. In the example shown in FIG. 7, the information on 'Source' has a value of '192.100.100.50', the location information 'Address' at which the receiver can receive the service has a value of '224.111.1.12', and the information on 'Port' has a value of '8208', according to the IP multicast scheme.

'rovider1.com' which is the domain name of the service provider and 'channel2' which is the host name of the service may be included. In 'DVBTriplet', the network identification 'original_network_id=0' according to the transmission system for transmitting the service, 'DVBTriplet@TSID indicating the transport stream identification 'transport_stream_id=202', and 'DVBTriplet@ServiceId' indicating the service identification 'service_id=5002' are included. Accordingly, the transmission identification of the individual service may be signaled by 'DVBTriplet'. In FIG. 7, the maximum bit rate 'MaxBitrate' of the stream is '4'.

In the example shown in FIG. 7, the logical channel number '2' of the second service and the information on the address, at which the service is located, are provided below the second 'SingleService' element. The information on 'Source' of the service has a value of '192.100.100.50' and 'Address' has a value of '224.111.1.13', and 'Port' has a value of '8208'. 'provider1.com' which is the domain name of the service provider and 'channel3' which is the host name of the service may be included. In 'DVBTriplet', 'original_network_id=0', 'transport_stream_id=5003' and 'service_id=203' are included. The maximum bit rate 'MaxBitrate' of the stream is '4'.

If the user registers a new user defined service in the receiver, the channel number and the access number of the new service are generated in the user defined service management record and are stored in the receiver.

Then, the user can select and view a service desired by the user among the user defined services, using the entry number and the channel number of the user defined service management record. Accordingly, the user can select the desired service using the entry number and the channel number in the form of the 2-part number or the 1-part number.

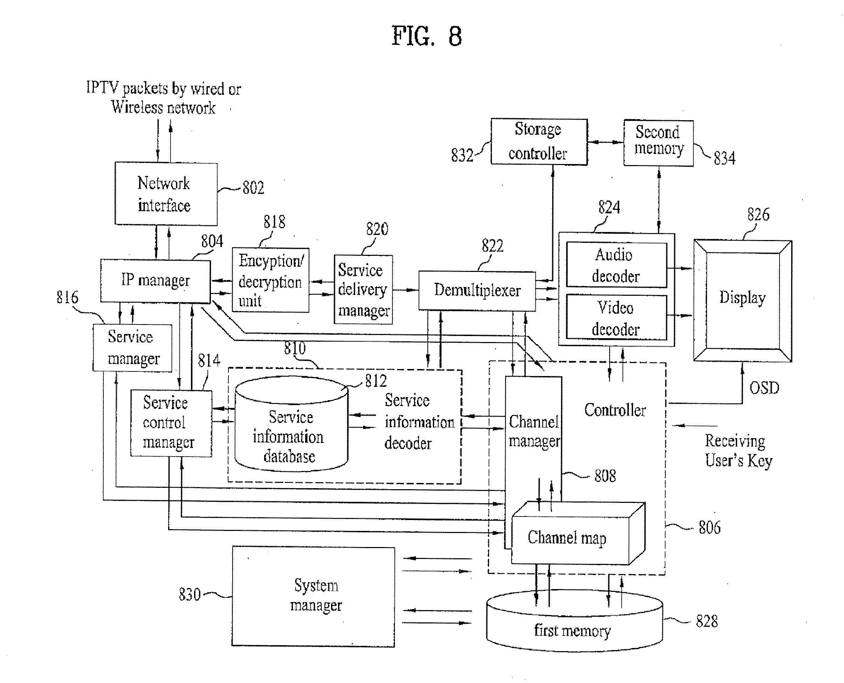

FIG. 8 is a block diagram showing the configuration of a digital broadcasting system for providing a service using an entry number, according to an embodiment of the present invention.

The receiver includes a network interface 802, an IP manager 804, a controller 806, a channel manager (CM) 808, a service information decoder 810, a service information database 812, a service discovery manager 814, a service control manager 816, an encryption/decryption unit 818, a service delivering manager 820, a demultiplexer 822, an audio/video decoder 824, a display 826, a first memory 828, a system manager 830, a second memory 834 and a storage controller 832.

The network interface 802 receives packets from a network and transmits packets from the receiver to the network.

The IP manager 804 can process a transmission/reception packet according to an IP protocol for setting information on a source and destination with respect to a packet received by the receiver and a packet transmitted by the receiver.

The controller 806 controls the operation of the receiver according to a user control signal received through an on-screen display (OSD) or a graphic user interface (GUI) for a user. For example, if a key input for selecting a channel is received from the user, the key input signal is transmitted to the channel manager (CM) 808.

The channel manager 808 may generate a channel map. In addition, the channel manager 808 may select a service according to the key input received from the controller 808 and output service discovery information of the service selected by the service discovery manager 814. Further, the channel manager (CM) 808 may receive the service information associated with the service from the service information decoder 810 and generate the channel map. The channel manager 808 may receive the information associated with the service from the service discovery manager 814 or the service information decoder 810 and generate the channel map along with each service. The channel manager 808 may control the demultiplexer 822 to selectively output an audio/video packet identifier (PID) of the channel selected by the user.

The service information decoder 810 decodes service information such as program specific (PSI) information and program and service information protocol (PSIP) information output from the demultiplexer 822.

The demultiplexer 822 may demultiplex a PSI section, a program and service information protocol (PSIP) section, or a service information (SI) section and a video/audio packet.

The service information decoder 810 decodes the sections associated with the services demultiplexed by the demultiplexer 822 and stores the decoded service information in the service information database 812.

The service discovery manager 814 controls information necessary for selecting the service provider for providing the service. The service discovery manager 814 may receive a control signal for channel selection from the controller 806 and search for the service according to the control signal.

The service control manager 816 selects and controls the service. For example, if the user selects a live broadcasting service of the existing broadcasting, the service is selected and controlled using IGMP or RTSP in the service control manager 816. And, if the user selects the service such as a video on demand (VOD), the service is selected and controlled using the RTSP in the service control manager 816. The RTSP protocol can provide a trick mode to a real-time stream.

The encryption/decryption unit 818 performs the CAS (conditional access system) function and the DRM (digital rights management) function with respect to the packet received from the IP manager 804 or the packet received from the service delivering manager 820. Accordingly, a packet to be transmitted is encrypted and a received packet is decrypted.

The service delivering manager 820 can control service data received by the IP protocol in real time. For example, if real-time streaming data is controlled, the service data can be controlled using a real-time transport protocol/RTP control protocol (RTP/RTCP) in the service delivering manager 820. The real-time streaming data can be transmitted using the RTP in the service delivering manager 820. The service delivering manager 820 can parse the received data packet according to the RTP and output the data packet to the demultiplexer 822. The network reception information is fed back to the server for providing the service using the RTCP.

The video/audio decoder 824 decodes the video data and the audio data demultiplexed by the demultiplexer 822. The video/audio data decoded by the video/audio decoder 824 is output through an output unit. In the example shown in FIG. 8, the video data is provided to the user through the display 826 of the output unit and the decoded audio data is provided to the user through a speaker (not shown).

The first memory 828 stores setup data of the system. The first memory may include a nonvolatile RAM (NVRAM) or a flash memory.

The system manager 830 controls the overall operation of the receiver system through a power source.

The second memory 834 receives and stores the video/audio data from the video/audio decoder 824 under the control of the storage controller 832.

The receiver can access the entry point of the IPTV system operator and receive a packet including the service provider discovery record shown in FIG. 3. The network interface 802 receives the packet including the service provider discovery record and transmits the received service provider discovery record to the IP manager 804. The service provider discovery record may include the entry number and the access information of the service provider.

The IP manager 804 checks the destination address of the received packet and processes and outputs the packet according to the transmission/reception protocol. The packet including the service provider discovery information may be transmitted according to the SD&S protocol (or the SDP). The IP manager 804 may transmit the parsed packet to the service discovery manager 814 according to the protocol.

The service discovery manager 814 may acquire the service provider discovery record included in the received packet and transmit and store the service provider discovery record to and in the service provider database 812. The service provider discovery record may include the entry number and the access information of the service provider.

The controller 806 can access the server operated by the service provider using the access information of the service provider, which is included in the service provider discovery record. And the controller 806 can control the service discovery manager 814 and the IP manager 804 so as to receive the packet including a service discovery record from the accessed server.

The packet including the service discovery record may be also transmitted/received using the SD&S protocol (or the SDP). Accordingly, the service discovery record can be received by the similar way to the service provider discovery record. The packet including the service discovery record is received by the IP manager 804 through the network interface 802. The received service discovery information may include the channel number and the access information of the service server.

The IP manager 804 checks the destination address of the received packet and transmits the received packet to the service discovery manager 814 if the address of the receiver is the destination of the packet.

The service discovery manager 814 parses the service discovery record included in the received packet. The service discovery manager 814 can transmit and store the service discovery record to and in the service information database 812. Alternatively, the service discovery information may be stored in the first memory 828.

The service information database 812 may store the received service provider discovery record information, the service discovery information and the entry point information.

If the user defined service is registered in the receiver and is used, a user defined service management record including the entry number and the channel number of the user defined service may be stored in the first memory 828 or channel map 806.

The channel manager (CM) 808 generates the channel map using the entry number of the service provider discovery record and the channel number of the service discover record stored in the service information database 812.

If the user defined service is registered and is used, the channel manager (CM) 808 can manage the entry number and the channel number of the user defined service management record stored in the first memory 828 or the service information database 812 together with the channel map 806.

The controller 806 receives number information for selecting a service from the user, accesses the server which provides the service according to a channel configured by at least one of the entry number and the channel number, and receives the service. When the channel corresponding to the entry number is changed or when the entry number is changed, the receiver can access the server which provides the changed system operator or user defined service. When the channel corresponding to the channel number is changed, the receiver can receive the service from the changed server of service provider or server which provides the user defined service.

For example, if the user inputs the 2-part number, the receiver recognizes the number of the first part as the entry number and the number of the second part as the channel number and switches the channel. If the user inputs the 1-part number when an entry number selected, the receiver recognizes the input number as the channel number within the entry number, which is currently being accessed, and switches the channel. Meanwhile, if the user inputs the 1-part number in a state in which any system operator is not accessed, the receiver accesses a system operator according to the number, receives the service provider discovery record information, and waits for the reception of the service discovery information.

The controller 806 can control the IP manager 804 and the network interface 802 so as to access the service server according to the 2-part channel.

Meanwhile, the service stream provided by the service server is transmitted to the IP manager 804 through the network interface 802. The service stream may be transmitted to the demultiplexer 822 through the encryption/decryption unit 818 and the service delivering manager 820.

The demultiplexer 822 demultimplexes the received service stream and transmits the demultiplexed service stream to the audio/video decoder 824 and the audio/video decoder 824 transmits the decoded services to the display 826 and the speaker so as to provide the services to the user.

The IP manager 804, the service delivering manager 820, the service discovery manager 814, the service control manager 816, the system manager 830, and the channel manager 808 may be configured by separate hardware as shown in FIG. 8 and may be implemented by software operated by the controller 806.

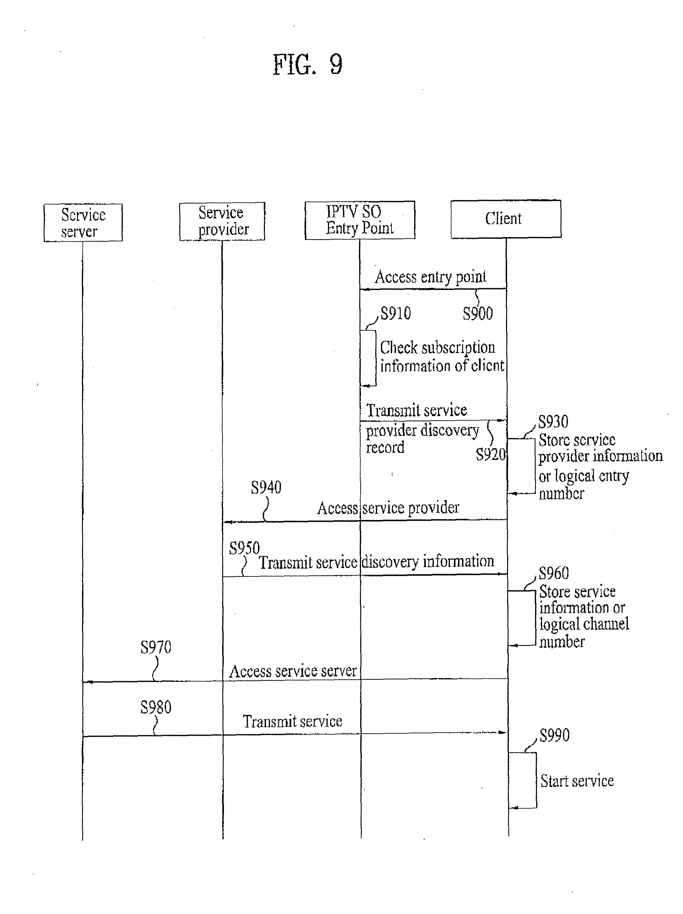

FIG. 9 is a view illustrating a process of transmitting/receiving the service using the entry number as an embodiment of a method of transmitting/receiving a digital broadcasting signal. FIG. 9 shows the flow and the sequence of the signals among the service server, the server of the service provider, the entry point of the IPTV system operator and the receiver.

If the receiver accesses the entry point of the IPTV system operator (S900), the IPTV system operator checks the subscription information of the receiver (S910). In the step S910, the receiver checks whether the receiver can receive the service associated with the IPTV system operator.

If it is checked that the receiver can receive the service from the system operator, then the IPTV system operator transmits the service provider discovery record to the receiver (S920).

The receiver stores the received service provider discovery record information (S930). The service provider discovery record information may include the entry number and the access information of the service provider.

The receiver accesses the server of the service provider using the access information of the service provider (S940).

When the receiver accesses the server of the service provider, the service discovery information is transmitted to the accessing receiver (S950).

The receiver stores the received service discovery information (S960). The service discovery information may include the channel number and the access information of the service server.

If the user defined service is registered in the receiver and is used, the entry number, the channel number and the access information of the user defined service may be stored in the receiver in the form of the user defined service management record shown in FIG. 7.

When the user inputs the number of the service to be received to the receiver, the receiver accesses the service server using the number system of the entry number and the channel number (S970).

The service server transmits the service data to the accessing receiver (S980).

The receiver receives the service data from the service server and provides the service to the user (S990).

Accordingly, it is possible to facilitate the switch to a desired service in various services so as to provide convenience to a user.

## Claims

1. A method of receiving digital contents using an Internet protocol (IP), the method comprising:
selecting first channel information for identifying an entry point and accessing the entry point;
selecting second channel information for identifying a service including the digital contents provided by a service provider; and
receiving the service including the digital contents from a service server of the service provider.

2. The method according to claim 1, further comprising :
receiving service provider discovery information from the entry point.

3. The method according to claim 1, further comprising :
receiving at least one of the first channel information and access information of the service provider from the entry point.

4. The method according to claim 1, further comprising :
receiving service discovery information from the service provider.

5. The method according to claim 1, further comprising:
receiving at least one of the second channel information and access information of the service server from the service provider.

6. The method according to claim 1, wherein, if the service is a package service, the second channel information identifies one service within the package service.

7. A method of receiving digital contents using an Internet protocol (IP), the method comprising:
selecting first channel information for identifying entry point information and second channel information for identifying a user defined service including the digital contents;
accessing a server for providing the user defined service; and
receiving the user defined service from the accessed server.

8. The method according to claim 7, further comprising:
receiving at least one of the first channel information and the second channel information from a user; and
storing the received at least one of the first channel information and the second channel information.

9. A method of transmitting digital contents in a digital content provision system using an Internet protocol (IP), the method comprising:
allowing a digital content receiver to be accessed by first channel information for identifying an entry point of the digital content provision system;
checking whether a user of the digital content receiver subscribes to a service provided by the digital content provision system; and
transmitting service provider discovery information to the digital content receiver if the user of the receiver subscribes to the service.

10. The method according to claim 9, wherein the transmitted service provider discovery information includes at least one of the first channel information and access information to a service provider of the digital content provision system.

11. A method of transmitting digital contents in a digital content provision system using an Internet protocol (IP), the method comprising:
allowing a receiver which selects second channel information for identifying a service including the digital contents to be accessed; and
transmitting service discovery information for describing the service to the receiver.

12. The method according to claim 11, wherein the transmitted service discovery information includes the second channel information.

13. The method according to claim 11, further comprising transmitting the service including the digital contents to the receiver.

14. The method according to claim 13, wherein, if the service is a package service, the second channel information identifies any one service included in the package service.

15. A digital content reception system which receives a service including digital contents from a server for providing the service, the system comprising:
an interface which transmits/receives Internet protocol (IP) packets;
an IP manager which processes the IP packets according to the IP so as to transmit/receive the IP packets;
a controller which receives a signal for selecting at least one of first channel information for identifying an entry point and second channel information for identifying the service, outputs a signal for accessing the server according to the received selection signal, and acquires the digital contents included in the IP packets received by the interface;
a memory which stores the first channel information and the second channel information; and
an output unit which outputs the digital contents received by the controller.

16. The digital content reception system according to claim 15, further comprising a service discovery manager which acquires at least one of the first channel information and access information of a service provider from a first IP packet received by the interface.

17. The digital content reception system according to claim 16, wherein the service discovery manager acquires at leas one of the second channel information and access information of a service server from a second IP packet received by the interface.

18. The digital content reception system according to claim 15, wherein the controller stores a channel map of a channel for providing the service using the first channel information and the second channel information.

19. The digital content reception system according to claim 15, wherein the memory stores a service provider discovery record including information on a service provider and a service discovery record including information on search for the service.

20. The digital content reception system according to claim 15, wherein the controller includes a channel manager which receives at least one of the first channel information and the second channel information and switches the service according the received channel information.
